# FASCICULE DE BREVET EUROPEEN

(11) **EP 3 182 290 B1**
(45) Date de publication et mention de la délivrance du brevet: **25.11.2020**
(21) Numéro de dépôt: 16162143.8
(22) Date de dépôt: 24.03.2016
(51) Int. Cl.: G06F 9/50, G06F 12/02, G06F 12/1009

(54) **PROCÉDÉ ET DISPOSITIF DE GESTION D'ESPACE MÉMOIRE**
VERFAHREN UND VORRICHTUNG ZUR VERWALTUNG VON SPEICHERPLATZ
METHOD AND DEVICE FOR MANAGING MEMORY SPACE

(30) Priorité: 15.12.2015 FR 1562408
(43) Date de publication de la demande: 21.06.2017
(73) Titulaire: STMicroelectronics (Rousset) SAS, 13790 Rousset (FR)
(72) Inventeur: ARNAL, Christophe, 06460 Saint Vallier de Thiey (FR); VAN DER TUIJN, Roland, 06370 Mouans-Sartoux (FR)
(74) Mandataire: Casalonga

(56) Documents cités:
- US-A- 4 084 226
- US-A1- 2011 302 388
- US-A1- 2015 154 119

## Description

Des modes de mise en œuvre et de réalisation de l'invention concernent la gestion d'espace mémoire, notamment les unités de gestion mémoire, communément désignés par l'homme du métier sous l'acronyme anglo-saxon « MMU » (Memory Management Unit »), et plus particulièrement les dispositifs de gestion d'espace mémoire applicables pour gérer les allocations dynamiques d'espaces mémoires virtuels de tailles variées entre des mémoires tampons (« buffer » en anglais) virtuelles et des mémoires physiques par exemple des mémoires à accès direct (« Random Access Memory » : RAM en anglais) ou des mémoires de masse telles que les disques durs qui peuvent former une extension de ces mémoires vives.

Ces allocations dynamiques résultent par exemple d'une demande d'allocation d'un espace mémoire virtuel provenant de moyens de commande tels que des microprocesseurs ou des contrôleurs d'accès direct à la mémoire (« Direct Memory Access » : DMA en anglais) sans que ces exemples ne soient limitatifs.

D'une façon générale, un dispositif de gestion d'espace mémoire classique partitionne généralement un espace mémoire virtuel en plusieurs pages de même taille. Par conséquent, chaque adresse virtuelle est un couple d'un premier champ indiquant un numéro de page d'adresses virtuelles et d'un deuxième champ représentant un déplacement (« offset » en anglais) au sein de la page d'adresses virtuelles correspondant audit numéro de page. Une mémoire vive est généralement composée d'espaces d'adresses physiques partitionnés en plusieurs zones (« frame » en anglais) ayant une taille identique à celle des pages d'adresses virtuelles.

Un tel dispositif possède en outre une table de pages (« page table » en anglais) configurée pour assurer la traduction des adresses virtuelles en adresses physiques. Ladite table de pages effectue en effet une association d'un numéro de page et d'un numéro de zone correspondant.

Comme les pages d'adresses virtuelles possèdent la même taille que les zones d'adresses physiques, un tel dispositif ne permet généralement pas d'éviter éventuellement des fragmentations internes.

Par ailleurs, un tel dispositif alloue généralement en réponse à une demande d'allocation d'espace mémoire virtuel, une ou plusieurs mémoires tampons virtuelles contiguës dans l'espace mémoire virtuel correspondant à un espace mémoire physique adéquat au sein de la mémoire vive. Comme une grande mémoire tampon nécessite souvent plusieurs allocations, on obtiendra au fur et à mesure des fragmentations au sein de l'espace d'adresses virtuelles, ce qui pourrait empêcher une nouvelle allocation d'espace mémoire virtuel d'une taille donnée même si la somme des tailles des espaces d'adresses virtuelles libres est supérieure à ladite taille donnée. Ce genre de problème dit de « fragmentation externe » est connu de l'homme du métier.

Plusieurs solutions à base de dispositifs de gestion d'espace mémoire virtuel comportant des mémoires tampons virtuelles de tailles différentes ou utilisant des algorithmes spécifiques tels que des algorithmes de coalescence sont généralement proposées pour pallier le problème de fragmentation interne ou celui de fragmentation externe.

La publication US2011/302388 A1 décrit un répartiteur de mémoire utilisant un gestionnaire de fragments responsable de l'allocation de mémoire virtuelle et physique pour une certaine taille de bloc.

La publication US2015/154119 A1 divulgue un système d'allocation de mémoire et de traduction d'adresse de page mémoire. La publication US4084226 A décrit un système de gestion de stockage virtuel par génération d'adresse virtuelle représentative de la segmentation de l'espace de stockage virtuel en segments de taille variable et de la pagination des segments en sous-segments de taille fixe.

Toutefois ces solutions proposées souffrent toujours au moins d'un des inconvénients suivants : la fragmentation interne, la fragmentation externe et le traitement de microprocesseur dans le dispositif correspondant.

Ainsi, selon un mode de mise en œuvre et de réalisation, il est proposé d'offrir un dispositif de gestion d'espace mémoire virtuel comportant un mécanisme d'adresses virtuelles différent pour réduire considérablement la fragmentation interne ainsi que la fragmentation externe sans utiliser d'algorithmes spécifiques exigeant des traitements de microprocesseurs.

Selon un autre mode de mise en œuvre et de réalisation, il est proposé de réaliser un tel dispositif sans trop impacter l'encombrement surfacique sur silicium.

Selon un aspect, il est proposé un procédé de gestion d'espace mémoire. Ceci comprend en réponse à une demande d'allocation d'un espace mémoire virtuel ayant une taille mémoire donnée au sein d'une mémoire virtuelle, ladite mémoire virtuelle étant partitionnée en partitions virtuelles, chaque partition étant subdivisée en sous-partitions virtuelles, chaque sous-partition correspondant à une combinaison de plusieurs secteurs de tailles identiques ou différentes d'une mémoire physiques,
a) une sélection d'une partition libre,
b) une sélection d'une sous-partition virtuelle correspondant à une combinaison de secteurs ayant une taille totale minimale couvrant ladite taille mémoire donnée de l'espace mémoire virtuel à allouer,
c) une sélection de secteurs libres de la mémoire physique correspondant à ladite combinaison sélectionnée,
d) une détermination d'une table de correspondance entre la partition virtuelle sélectionnée et les adresses physiques initiales desdits secteurs libres sélectionnés, et
e) une génération d'une adresse virtuelle comportant une première partie permettant d'identifier ladite sous-partition virtuelle sélectionnée et une deuxième partie destinée à contenir les différentes adresses dudit espace mémoire virtuel alloué au sein de ladite sous-partition virtuelle.

Ainsi on peut avantageusement réduire la fragmentation interne car un tel procédé supporte des secteurs de tailles variées. Par conséquent, une partition virtuelle, autrement dit une mémoire tampon virtuelle, d'une telle mémoire virtuelle peut être allouée avec des secteurs de tailles différentes correspondant mieux à la taille mémoire donnée de la demande d'allocation.

En outre, le fait d'avoir une partition virtuelle associée à plusieurs secteurs non contigus permet donc de diminuer la fragmentation externe car ladite mémoire tampon virtuelle est toujours contiguë au vu d'un processeur. Aucun algorithme spécifique tel que l'algorithme de coalescence n'est nécessaire dans un tel procédé et le traitement d'un tel procédé est donc rapide.

On incorpore ainsi dans l'adresse virtuelle générée des informations d'identification des secteurs sélectionnées.

Selon un mode de mise en œuvre, la première partie comporte une première sous-partie permettant d'identifier ladite partition libre et une deuxième sous-partie permettant d'identifier la sous-partition sélectionnée au sein de ladite partition libre.

Les tailles des secteurs peuvent être choisies dans un jeu de tailles de référence croissantes. La combinaison de secteurs d'une sous-partition peut correspondre à une association d'un premier nombre de secteurs d'une première taille dudit jeu et éventuellement d'un deuxième nombre de secteurs d'une deuxième taille dudit jeu immédiatement supérieure à la première taille. La deuxième sous-partie peut comporter un premier champ destiné à identifier ledit premier nombre et éventuellement ledit deuxième nombre, et un deuxième champ destiné à identifier ladite première taille et éventuellement ladite deuxième taille.

Lorsqu'il n'y a pas assez de secteurs de la première taille libres correspondant à ladite combinaison sélectionnée, ledit procédé peut comporter en outre, après l'étape c), une première itération de l'étape b) de façon à déterminer une première sous-partition ajustée correspondant à une première combinaison ajustée ayant le deuxième champ incrémenté par rapport à celui de ladite combinaison sélectionnée et le premier champ minimisé, et une première itération de l'étape c) pour sélectionner des secteurs libres correspondant à ladite première combinaison ajustée.

Dans le cas où il n'y a pas assez de secteurs de la première taille libres correspondant à ladite première combinaison ajustée, ledit procédé peut par exemple comprendre en outre, après la première itération de l'étape c), une deuxième itération de l'étape b) de façon à déterminer une deuxième sous-partition ajustée correspondant à une deuxième combinaison ajustée ayant le deuxième champ incrémenté par rapport à celui de ladite première combinaison ajustée et le premier champ minimisé, et une deuxième itération de l'étape c) pour sélectionner des secteurs physiques libres correspondant à ladite deuxième combinaison ajustée.

Avantageusement, la table de correspondance comporte pour chaque partition virtuelle plusieurs index de secteurs, chaque index de secteur étant destiné à être rempli avec l'adresse physique initiale d'un des secteurs libres sélectionnés.

Selon un mode de mise en œuvre, les index de secteurs sont remplis prioritairement avec les adresses physiques initiales des secteurs libres sélectionnés ayant la plus grande taille mémoire.

Ladite deuxième partie de l'adresse virtuelle générée peut comporter par exemple plusieurs champs d'index correspondant chacun à un index de secteurs dédié à des secteurs de tailles différentes dudit jeu de tailles de référence.

Le procédé peut comporter en outre au sein de ladite table de correspondance une désignation d'un des index de secteurs correspondant à la partition virtuelle sélectionnée à partir de ladite première sous-partie, dudit premier paramètre et d'une adresse de base indiquant l'adresse de début de ladite table de correspondance.

A titre indicatif mais non limitatif, le procédé comporte au sein dudit secteur sélectionné dont l'adresse physique initiale est stockée dans ledit index de secteurs une désignation de l'adresse physique absolue correspondant à ladite adresse virtuelle à partir dudit deuxième paramètre et de ladite adresse physique initiale.

Selon un mode de mise en œuvre, le jeu de tailles de référence comporte quatre tailles de référence différentes et ladite deuxième partie peut comporter quatre champs d'index correspondants.

Chaque répartition peut être subdivisée par exemple en trente-deux sous-partitions virtuelles.

Chaque sous-partition peut correspondre à une combinaison pouvant impliquer jusqu'à huit secteurs.

Selon un autre aspect, il est proposé un dispositif de gestion d'espace mémoire. Ceci comprend :
une mémoire virtuelle partitionnée en partitions virtuelles, chaque partition étant subdivisée en sous-partitions virtuelles, une mémoire physique comportant plusieurs secteurs, chaque sous-partition correspondant à une combinaison de plusieurs secteurs de tailles identiques ou différentes, et des moyens de traitement configurés pour effectuer :
une sélection d'une partition libre,
une sélection d'une sous-partition virtuelle correspondant à une combinaison de secteurs ayant une taille totale minimale couvrant ladite taille mémoire donnée de l'espace mémoire virtuel à allouer,
une sélection de secteurs libres de la mémoire physique correspondant à ladite combinaison sélectionnée,
une détermination d'une table de correspondance entre la partition virtuelle sélectionnée et les adresses physiques initiales desdits secteurs libres sélectionnés, et
une génération d'une adresse virtuelle comportant une première partie permettant d'identifier ladite sous-partition virtuelle sélectionnée et une deuxième partie destinée à contenir les différentes adresses dudit espace mémoire virtuel alloué au sein de ladite sous-partition virtuelle.

Selon un mode de réalisation, la première partie comporte une première sous-partie permettant d'identifier ladite partition libre et une deuxième sous-partie permettant d'identifier la sous-partition sélectionnée au sein de ladite partition libre.

Selon un autre mode de réalisation, les moyens de traitement sont par ailleurs configurés pour choisir les tailles des secteurs dans un jeu de tailles de référence croissantes, la combinaison de secteurs d'une sous-partition correspond à une association d'un premier nombre de secteurs d'une première taille dudit jeu et éventuellement d'un deuxième nombre de secteurs d'une deuxième taille dudit jeu immédiatement supérieure à la première taille, la deuxième sous-partie comporte un premier champ destiné à identifier ledit premier nombre et éventuellement ledit deuxième nombre, et un deuxième champ destiné à identifier ladite première taille et éventuellement ladite deuxième taille.

Lorsqu'il n'y a pas assez de secteurs de la première taille libres correspondant à ladite combinaison sélectionnée, les moyens de traitement peuvent être en outre configurés pour déterminer une première sous-partition ajustée correspondant à une première combinaison ajustée ayant le deuxième champ incrémenté par rapport à celui de ladite combinaison sélectionnée et le premier champ minimisé, et pour sélectionner des secteurs libres correspondant à ladite première combinaison ajustée.

Par ailleurs, lorsqu'il n'y a pas assez de secteurs de la première taille libres correspondant à ladite première combinaison ajustée, les moyens de traitement peuvent être en outre configurés pour déterminer une deuxième sous-partition ajustée correspondant à une deuxième combinaison ajustée ayant le deuxième champ incrémenté par rapport à celui de ladite première combinaison ajustée et le premier champ minimisé, et pour sélectionner des secteurs libres correspondant à ladite deuxième combinaison ajustée.

Avantageusement, la table de correspondance peut être incorporée dans la mémoire physique et comporter pour chaque partition virtuelle plusieurs index de secteurs destinés à être rempli chacun avec l'adresse physique initiale d'un des secteurs libres sélectionnés.

Selon un mode de réalisation, les index de secteurs sont remplis prioritairement avec les adresses physiques initiales des secteurs libres sélectionnés ayant la plus grande taille mémoire.

Chaque adresse de ladite deuxième partie comporte par exemple plusieurs champs d'index correspondant chacun à un index de secteurs dédié à des secteurs d'une taille différente dudit jeu.

Les moyens de traitement peut être en outre configurés pour générer à partir desdits champs d'index et de ladite deuxième sous-partie un premier paramètre de secteur et un deuxième paramètre de secteur.

La mémoire physique peut comporter par ailleurs une adresse de base indiquant l'adresse de début de ladite table de correspondance et les moyens de traitement peuvent être configurés pour désigner au sein de ladite table de correspondance un des index de secteurs correspondant à la partition virtuelle sélectionnée à partir de ladite première sous-partie, dudit premier paramètre et de ladite adresse de base.

Les moyens de traitement peuvent être configurés pour désigner au sein dudit secteur sélectionné dont l'adresse physique initiale est stockée ledit index de secteurs l'adresse physique absolue correspondant à ladite adresse virtuelle à partir dudit deuxième paramètre et de ladite adresse physique initiale.

Selon un mode de réalisation, le jeu de tailles de référence comporte quatre tailles de référence différentes et ladite deuxième partie comporte quatre champs d'index correspondants. Chaque répartition peut être subdivisée en trente-deux sous-partitions virtuelles. Chaque sous-partition peut correspondre à une combinaison pouvant impliquer jusqu'à huit secteurs.

D'autres avantages et caractéristiques de l'invention apparaîtront à l'étude de la description détaillée de modes de mise en œuvre et de réalisation, pris à titre d'exemples non limitatifs et illustrés par les dessins annexés sur lesquels :

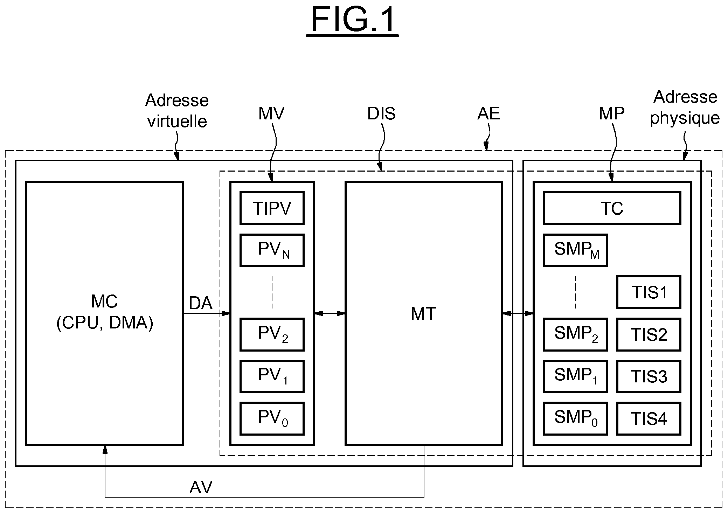

- les figures 1 à 10 sont relatives à différents modes de mise en œuvre et de réalisation de l'invention.

La figure 1 illustre très schématiquement un exemple d'un appareil électronique AE, par exemple du type système de communication à faible consommation d'énergie, incorporant un dispositif de gestion d'espace mémoire DIS selon l'invention.

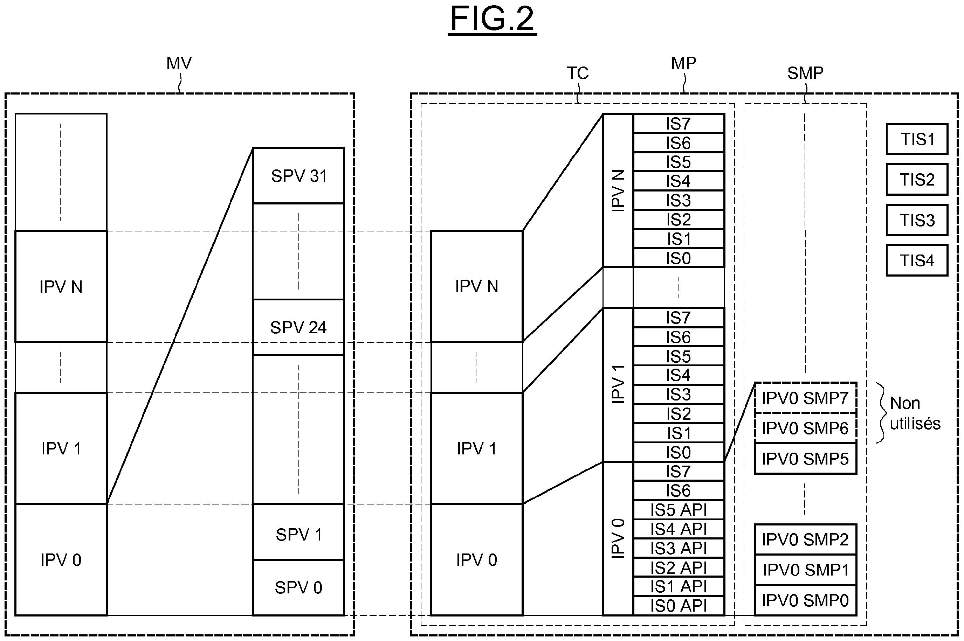

Ledit dispositif DIS comprend une mémoire virtuelle MV comportant des espaces mémoires virtuels. Ladite mémoire virtuelle MV est partitionnée en une pluralité de partitions virtuelles PVo à PV_{N} (illustrées sur la figure 2) formant des mémoires tampons virtuelles (« virtual buffer » en anglais).

Ledit dispositif DIS comprend également une mémoire physique MP comportant plusieurs secteurs SMP₀ à SMP_{M} de tailles identiques ou différentes et une table de correspondance TC.

Lesdits secteurs physiques SMP₀ à SMP_{M} ont plusieurs, par exemple quatre, tailles différentes. La mémoire physique MP comporte plusieurs secteurs SMPₖ pour chaque taille de secteur donnée.

La mémoire physique MP comporte en outre quatre tables d'index de secteurs TIS1 à TIS4 chacune correspondant aux secteurs d'une desdites tailles différentes. Ces tables d'index de secteurs TIS1 à TIS4 sont configurées pour détecter le caractère libre ou non d'un secteur SMPₖ de la taille correspondante.

Ledit dispositif DIS comprend en outre des moyens de traitement MT communiquant avec ladite mémoire virtuelle MV et ladite mémoire physique MP.

Les moyens de traitement MT sont configurés pour recevoir une demande d'allocation DA d'un espace mémoire virtuel ayant une taille mémoire donnée au sein de la mémoire virtuelle MV en provenance d'un moyen de commande tel qu'un microprocesseur ou un contrôleur DMA.

En réponse à cette demande d'allocation DA, les moyens de traitement MT sont configurés pour délivrer une adresse virtuelle AV permettant au moyens de commande MC d'adresser l'espace mémoire virtuel qui lui a été alloué.

Comme on le verra plus en détails ci-après, l'adresse virtuelle AV permet notamment d'adresser une partition virtuelle PV libre de ladite mémoire virtuelle MV correspondant à une combinaison de plusieurs secteurs SMP₀ à SMP_{M} de tailles identiques ou différentes dans la mémoire physique MP.

Les moyens de traitement MT peuvent être réalisés de façon logicielle au sein d'un microprocesseur.

Il convient de noter que le moyen de commande MC, la mémoire virtuelle MV et les moyens de traitement MT traitent des adresses virtuelles tandis que la mémoire physique MP traite des adresses physiques.

Ladite table de correspondance TC de la mémoire physique MP effectue une correspondance entre une partition virtuelle PVᵢ sélectionnée par les moyens de traitement MT et les adresses physiques initiales API des secteurs allouées à ladite partition virtuelle PVᵢ sélectionnée.

L'architecture et le fonctionnement de chaque composant dudit dispositif seront détaillés ci-après.

Chaque partition PVᵢ de la mémoire virtuelle MV comporte un numéro de partition. Ladite mémoire virtuelle MV possède une table d'index des partitions virtuelles TIPV indexée par ledit numéro de partition et indiquant l'état de disponibilité de chaque partition PV. Le nombre de partitions virtuelles est défini par le nombre maximal de mémoires tampons virtuelles qui peuvent être demandées.

Comme indiqué ci-avant, les moyens de traitement MT sont configurés pour sélectionner une partition PV libre en réponse à une demande d'allocation DA d'un espace mémoire virtuel ayant une taille donnée.

Si aucune partition PVᵢ n'est libre, alors les moyens de traitement MT indiquent au moyen de commande MC que sa demande d'allocation ne peut pas être satisfaite.

On se réfère maintenant à la figure 2 pour illustrer plus en détail l'architecture de la mémoire virtuelle MV.

Chaque partition virtuelle PVᵢ est subdivisée en sous-partitions virtuelles SPVⱼ, chacune correspondant à une combinaison distincte de plusieurs secteurs physiques SMPₖ de tailles identiques ou différentes.

A titre indicatif mais non limitatif, chaque partition virtuelle PVᵢ occupe un espace mémoire virtuel de 512 ko et comporte 32 sous-partitions chacune correspondant à un espace mémoire virtuel de 16 ko.

Les moyens de traitement MT sont en outre configurés pour sélectionner une sous-partition virtuelle SPVⱼ correspondant à une combinaison de secteurs SMPₖ. Chaque sous-partition SPVⱼ correspond à une combinaison pouvant impliquer jusqu'à huit secteurs SMPₖ. Cette combinaison des secteurs SMPₖ est configurée pour avoir une taille totale minimale couvrant ladite taille mémoire donnée de l'espace mémoire virtuel à allouer de façon à réduire la fragmentation interne.

Par ailleurs, comme la taille mémoire physique maximale qui peut être allouée au moyen de commande MC correspond à la taille d'une sous-partition virtuelle SPVᵢ (soit 16 ko), la fragmentation externe dudit dispositif DIS est avantageusement réduite à zéro.

En d'autres termes, ici une demande d'allocation d'un espace mémoire virtuel au sein dudit dispositif DIS a une taille qui n'est jamais supérieure à celle d'une mémoire tampon virtuelle (« virtual buffer » en anglais).

La table de correspondance TC comporte pour chaque partition virtuelle PVᵢ un index de partition virtuelle IPV₁. Chaque index IPV₁ est associé à huit index de secteurs IPV₁IS0 à IPV₁IS7. Chaque index de secteurs IS0 à IS7 est susceptible d'être rempli avec l'adresse physique initiale API d'un des secteurs physique SMPₖ libres sélectionnés pour ladite partition virtuelle PVᵢ correspondante.

Les moyens de traitement MT sont configurés pour effectuer une sélection de secteurs SMPₖ libres correspondant à ladite combinaison sélectionnée en fonction du contenu desdites tables d'index de secteurs TIS1 à TIS4. Une fois les secteurs sélectionnés, les moyens de traitement MT effectuent également une détermination de ladite table de correspondance TC en remplissant les index de secteurs correspondants avec les adresses physiques initiales desdits secteurs sélectionnés.

Par exemple, on peut observer sur la figure 2 que les secteurs IPV0 SMP0 à IPV0 SMP5 sont sélectionnés mais les secteurs IPV0 SMP6 et IPV0 SMP7 restants ne sont pas utilisés.

Une fois les secteurs IPV0 SMP0 à IPV0 SMP5 sélectionnés, les moyens de traitement sont configurés pour écrire respectivement les adresses physiques initiales API de ces secteurs IPV0 SMP0 à IPV0 SMP5 dans les index de secteurs IS0 à IS5 du premier index de partition virtuelle IPV0 correspondant à la première partition virtuelle PV0.

Il convient de noter que la taille du secteur IPV0 SMP0 est plus grande que celle des autres secteurs IPV0 SMP1 à IPV0 SMP7 correspondant à l'index de partition virtuelle IPV0 car les index de secteurs IS0 à IS7 sont remplis prioritairement avec les adresses physiques initiales des secteurs libres sélectionnés ayant dans cet exemple la plus grande taille mémoire.

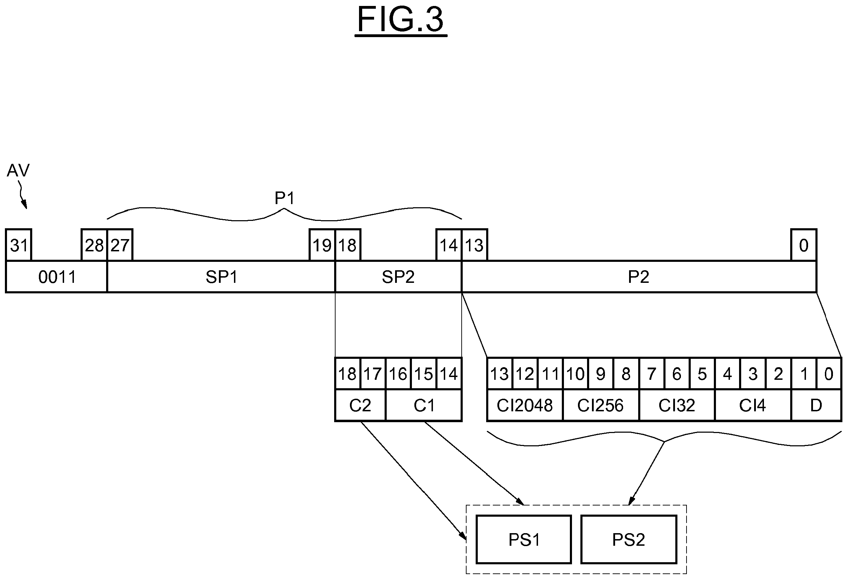

On se réfère maintenant à la figure 3 pour illustrer plus en détail un exemple de composition de l'adresse virtuelle AV.

A titre indicatif mais non limitatif, l'adresse virtuelle AV illustrée ici sur la figure 3 comprend un mot de 32 bits adapté pour une implémentation dans un système de 32 bits. Il serait bien entendu possible de prévoir une adresse virtuelle AV sur 48 bits ou sur 64 bits selon le système dans lequel ledit dispositif DIS est appliqué.

Les quatre premiers bits de poids forts 28 à 31 de l'adresse virtuelle AV définissent une zone d'adressage sur le bus alloué à la mémoire virtuelle MV et restent toujours constants, par exemple égaux à 0011.

Le nombre de ces bits peut être différent en fonction de l'application envisagée. En général on fournira avantageusement la plus grande plage virtuelle sans rentrer en conflit avec des plages existantes déjà allouées à d'autres périphériques présents sur le bus.

Les quatorze bits de poids forts suivants 14 à 27 forment une première partie P1 permettant d'identifier ladite sous-partition SPVⱼ sélectionnée et les quatorze bits de poids faibles 0 à 13 forment une deuxième partie P2 destinée à contenir les différentes adresses dudit espace mémoire virtuel alloué au sein de ladite sous-partition virtuelle SPVⱼ. Ces quatorze bits correspondent à une taille de 16 ko.

Par ailleurs, les neuf premiers bits de poids forts 19 à 27 de la première partie P1 forment une première sous-partie SP1 permettant d'identifier ladite partition PV libre. En effet, la valeur binaire contenue dans la première sous-partie SP1 correspond au numéro de partition de la partition virtuelle libre trouvée dans la table TIPV d'index de partitions virtuelles.

Les cinq bits de poids faibles 14 à 18 de la première partie P1 forment une deuxième sous-partie SP2 comportant un premier champ C1 de trois bits 14 à 16 et un deuxième champ C2 de deux bits 17 et 18. Ces deux champs C1 et C2 sont destinés à identifier une combinaison de secteurs.

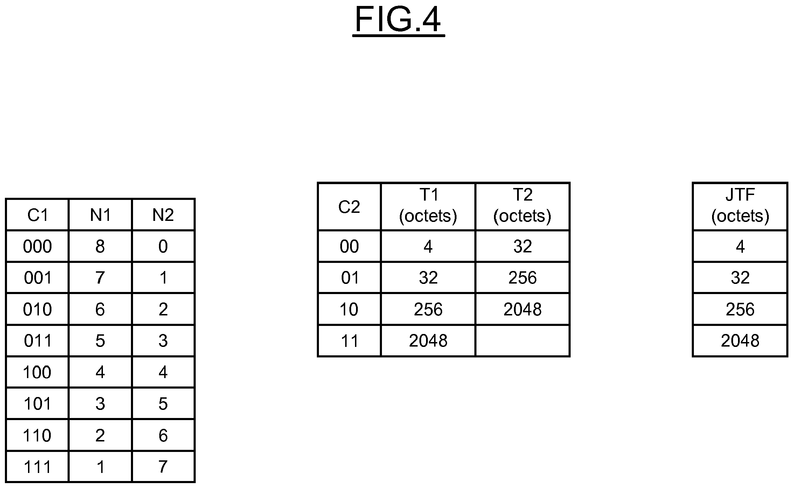

Plus précisément, les tailles des secteurs sont choisies dans un jeu JTF de tailles de référence croissantes comportant ici quatre tailles de référence différentes, par exemple : 4 octets, 32 octets, 256 octets et 2048 octets (soit 2 ko), comme illustré sur la figure 4.

La combinaison de secteurs d'une sous-partition est définie par une association d'un premier nombre N1 de secteurs d'une première taille T1 dudit jeu JTF et éventuellement d'un deuxième nombre N2 de secteurs d'une deuxième taille T2 dudit jeu JTF, immédiatement supérieure à la première taille T1.

Comme illustré sur la figure 4, ledit premier champ C1 est destiné à identifier ledit premier nombre N1 et éventuellement ledit deuxième nombre N2, sachant que la somme du premier nombre N1 et du deuxième nombre N2 est constante et égale ici à huit. Ainsi, lorsque le premier champ C1 est égal à 111 en binaire, le premier nombre N1 et le deuxième nombre N2 sont respectivement égaux à 8 et 0.

Ledit deuxième champ C2 est destiné à identifier ladite première taille T1 et éventuellement ladite deuxième taille T2. Comme on voit sur la figure 4, il n'y a pas dans cet exemple de secteurs physiques de la deuxième taille T2 lorsque ledit deuxième champ C2 a la valeur maximale binaire 11.

Ladite deuxième partie P2 de l'adresse virtuelle AV générée comporte en outre (figure 3) plusieurs, ici par exemple quatre, champs d'index CI4, CI32, CI256 et CI2048 correspondant chacun à un index de secteurs IS0 à IS7 dédié à des secteurs de tailles différentes (4 octets, 32 octets, 256 octets et 2048 octets) dudit jeu JTF de tailles de référence. Chaque champ d'index CI4, CI32, CI256 ou CI2048 possède respectivement trois bits adjacents 2 à 4, 5 à 7, 8 à 10 et 11 à 13.

Les bits de poids faibles 0 et 1 de la deuxième partie P2 sont des bits de décalages (« offset » en anglais) D participant à la désignation des emplacements possibles au sein d'un secteur de taille donnée.

Ainsi, les bits 0 et 1 sont des bits d'offset pour les secteurs de taille 4 octets et les bits 0 à 4 sont des bits d'offset pour les secteurs de taille 32 octets. Par analogie, les bits 0 à 7 sont des bits d'offset pour les secteurs de taille 256 octets et les bits 0 à 10 sont des bits d'offset pour les secteurs de taille 2048 octets.

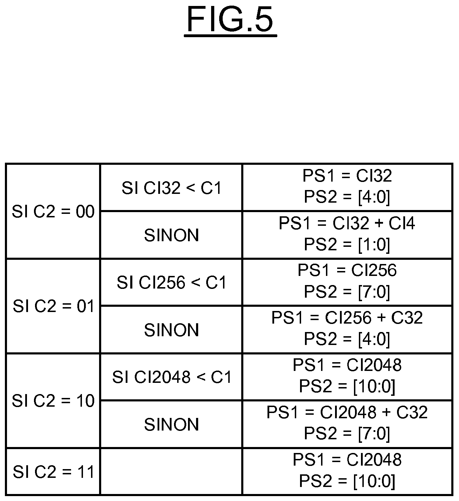

La figure 5 illustre à partir desdits champs d'index CI4, CI32, CI256 et CI2048 et des champs C1 et C2 de ladite deuxième sous-partie SP2, une génération d'un premier paramètre de secteur PS1 et d'un deuxième paramètre de secteur PS2.

Lorsque le deuxième champ C2 est égal à 00, le premier paramètre de secteur PS1 est égal au champ d'index CI32 correspondant aux secteurs ayant la taille de 32 octets et le deuxième paramètre de secteur PS2 prend les valeurs binaires de cinq bits de poids faible de la deuxième partie P2 si le premier champ C1 est supérieur au champ d'index CI32.

Sinon le premier paramètre de secteur PS1 vaut la somme du champ d'index CI32 et du champ d'index CI4 et le deuxième paramètre de secteur PS2 prend les valeurs binaires des deux bits de poids faibles de la deuxième partie P2.

Lorsque le deuxième champ C2 est égal à 01, le premier paramètre de secteur PS1 est égal au champ d'index CI256 correspondant aux secteurs ayant la taille de 256 octets et le deuxième paramètre de secteur PS2 prend les valeurs binaires des huit bits de poids faible de la deuxième partie P2 si le premier champ C1 est supérieur au champ d'index CI256.

Sinon le premier paramètre de secteur PS1 vaut la somme du champ d'index CI256 et du champ d'index CI32 et le deuxième paramètre de secteur PS2 prend les valeurs binaires des cinq bits de poids faible de la deuxième partie P2.

Lorsque le deuxième champ C2 est égal à 10, le premier paramètre de secteur PS1 est égal au champ d'index CI2048 correspondant aux secteurs ayant la taille de 2048 octets et le deuxième paramètre de secteur PS2 prend les valeurs binaires des onze bits de poids faible de la deuxième partie P2 si le premier champ C1 est supérieur au champ d'index CI2048.

Sinon le premier paramètre de secteur PS1 vaut la somme du champ d'index CI2048 et du champ d'index CI256 et le deuxième paramètre de secteur PS2 prend les valeurs binaires de huit bits de poids faible de la deuxième partie P2.

Lorsque le deuxième champ C2 est égal à 11, le premier paramètre de secteur PS1 est égal au champ d'index CI2048 correspondant aux secteurs ayant la taille de 2048 octets et le deuxième paramètre de secteur PS2 prend les valeurs binaires des onze bits de poids faible de la deuxième partie P2.

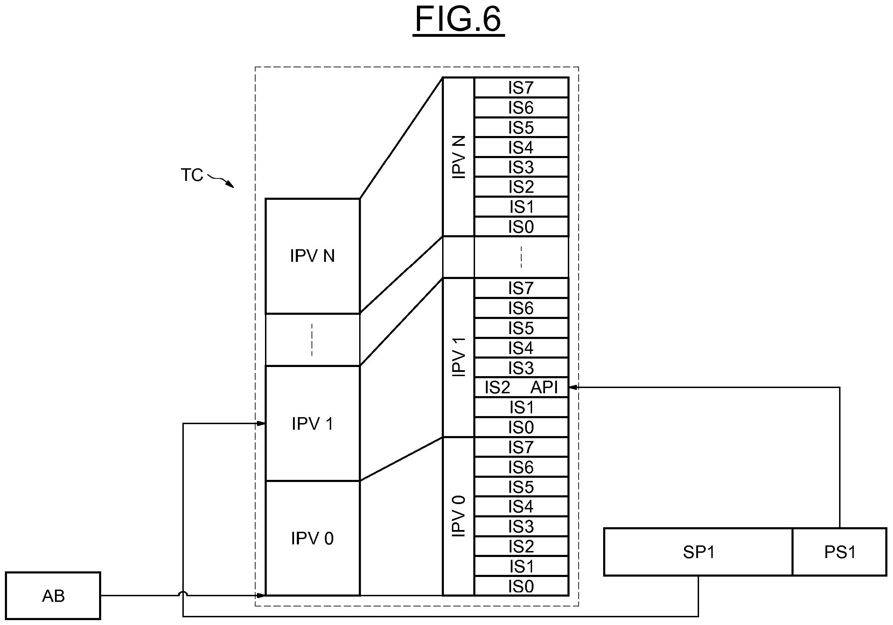

En se référant à la figure 6, on illustre le fonctionnement d'un indicateur d'index de secteurs au sein de ladite table de correspondance TC.

Comme déjà illustré sur la figure 2, la table de correspondance TC comporte plusieurs index de partition virtuelle IPV0 à IPVN. Chaque index de partition virtuelle IPV0 à IPVN comporte huit index de secteurs IS0 à IS7 et la taille de chaque index de partition virtuelle est de 8*4 octets. En conséquence, la taille de chaque index de secteurs est de 4 octets, soit 32 bits.

Un registre comporte en outre une adresse de base AB indiquant l'adresse de début de ladite table de correspondance TC.

En utilisant ladite première sous-partie SP1, ledit premier paramètre de secteur PS1 et ladite adresse de base AB de la mémoire physique MP, les moyens de traitement MT sont configurés pour désigner un des index de secteurs IS₁ correspondant à la partition virtuelle PVᵢ sélectionnée. Le contenu de SP1 désigne l'index IPVᵢ correspondant. Ledit premier paramètre PS1 désigne le numéro d'index de secteurs ISⱼ au sein de l'index de partition virtuelle IPVᵢ sélectionnée.

Par exemple, une première sous-partie SP1 valant 2 correspond à l'index IPV1 et un premier paramètre PS1 valant 3 correspond à l'index de secteurs IS2. Cet index de secteur IS2 contenu dans l'index IPV1 contient l'adresse physique initiale API du secteur physique IPV1 SMP2 sélectionné.

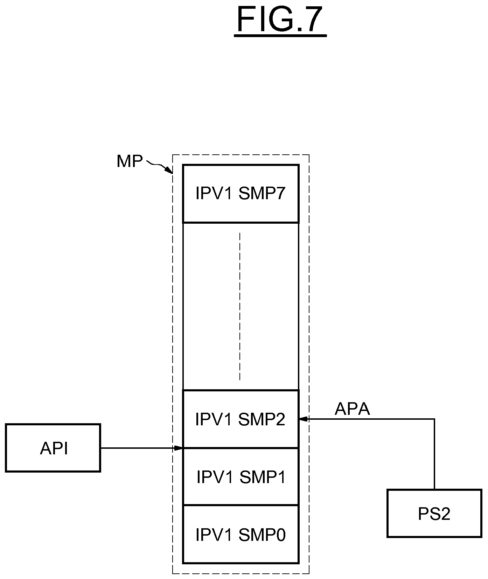

Afin d'obtenir l'adresse physique absolue APA correspondant à ladite adresse virtuelle AV, les moyens de traitement MT sont en outre configurés pour désigner (figure 7) grâce à l'adresse physique initiale API, le début du secteur IPV1 SMP2 sélectionné. Le deuxième paramètre PS2 correspondant au décalage (« offset » en anglais) au sein du secteur physique IPV1 SMP2 sélectionné.

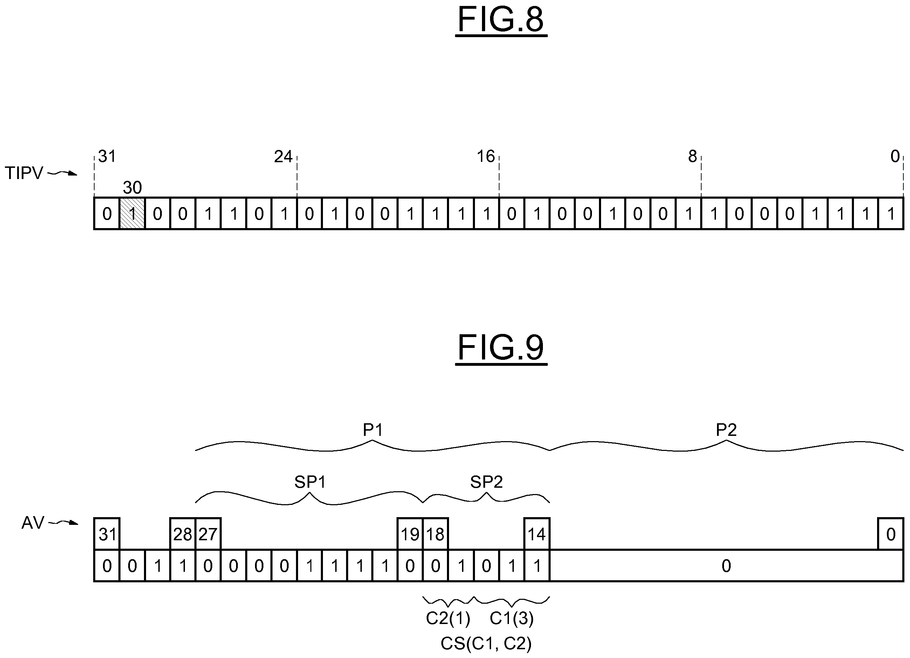

On se réfère maintenant aux figures 8 à 10 pour illustrer un exemple d'un procédé de gestion d'espace mémoire selon l'invention.

Les moyens de traitement MT reçoivent une demande d'allocation DA d'espace mémoire virtuelle ayant par exemple une taille de 850 octets.

Comme illustré sur la figure 8, les moyens de traitement MT vérifient tout d'abord la table TIPV d'index de partitions virtuelles afin de sélectionner une partition virtuelle PVᵢ libre.

Dans l'exemple illustré, la table TIPV d'index des partitions virtuelles comprend 32 index de partitions virtuelles correspondant respectivement à 32 partitions virtuelles PV0 à PV31 différentes.

La valeur non nulle d'un index signifie que la partition virtuelle PVᵢ correspondante est libre. Par conséquent, les moyens de traitement MT vérifient par exemple chaque bit de ladite table TIPV jusqu'à trouver une valeur non nulle. Dans l'exemple on suppose que la partition virtuelle PV30 libre correspondant au numéro 30 (valeur décimale) de la table d'index TIPV des partitions virtuelles est sélectionnée par les moyens de traitement MT.

Les moyens de traitement MT effectuent ensuite un calcul pour déterminer une combinaison des secteurs physiques SMPₖ ayant une taille totale minimale couvrant 850 octets.

En premier lieu, les moyens de traitement MT effectuent un calcul pour déterminer des secteurs SMP ayant une deuxième taille T2. A cet égard, la taille donnée de 850 octets est divisée par une taille de secteurs immédiatement inférieure à la taille donnée, ici 256 octets qui correspond à ladite taille T2. En arrondissant le résultat au plus grand entier inférieur, on obtient le premier champ C1 valant 3 en valeur décimale et 011 en valeur binaire.

Donc, si l'on se réfère à la figure 4, on voit qu'on obtient N2 = 3 ce qui correspond à trois secteurs de taille T2. Par ailleurs N1 vaut 5.

En deuxième lieu, les moyens de traitement MT déterminent le nombre de secteurs ayant une taille plus petite que 256 octets, ici c'est-à-dire 32 octets. En arrondissant le résultat de (850-256*3)/32 au plus petit entier supérieur, le nombre de secteurs ayant une taille de 32 octets est de 3. Donc on n'utilise que trois secteurs de taille T1 (32 octets) parmi les N1 (=5) secteurs possibles.

La taille mémoire virtuelle allouée est alors calculée par les moyens de traitement MT comme ci-après : 256*3+32*3 = 864 octets. Si l'on se réfère à la figure 4, on voit également que C2 vaut 1 en valeur décimale (01 en binaire).

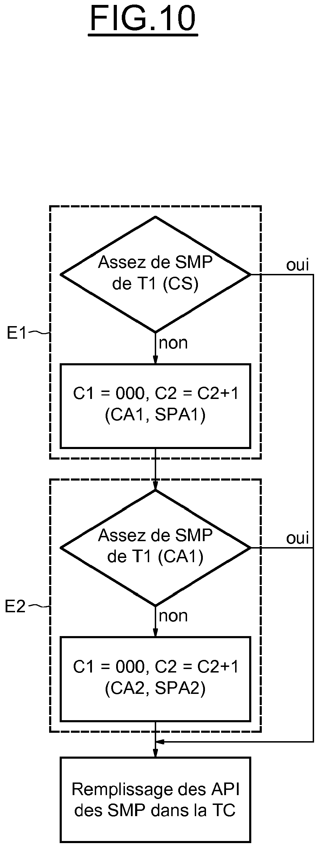

Ledit calcul aura en outre deux étapes (El et E2) d'itérations si ladite combinaison sélectionnée CS (champs C1 et C2) des secteurs SMP ne peut pas être satisfaites, comme illustré sur la figure 10.

Dans la première étape El, les moyens de traitement MT vérifient s'il y a assez de secteurs physiques SMP de petite taille T1 libres correspondant à ladite combinaison sélectionnée CS, ici c'est-à-dire des secteurs SMP de 32 octets.

Si le résultat de cette vérification est négatif, les moyens de traitement MT déterminent à nouveau une première combinaison ajustée CA1 ayant le deuxième champ C2 incrémenté (2 au lieu de 1) et le premier champ C1 minimisé (0). Les moyens de traitement MT sélectionnent ensuite des secteurs SMP libres correspondant à ladite première combinaison ajustée CA1.

Dans la deuxième étape E2, les moyens de traitement MT vérifient à nouveau s'il y a assez de secteurs SMP de petite taille T1 libres correspondant à ladite première combinaison ajustée CA1, ici c'est-à-dire des secteurs SMP de 256 octets.

Si le résultat de cette dernière vérification est toujours négatif, les moyens de traitement MT déterminent à nouveau une deuxième combinaison ajustée CA2 ayant le deuxième champ C2 incrémenté (3 au lieu de 2) et le premier champ C1 minimisé (0). Les moyens de traitement MT sélectionnent ensuite des secteurs SMP libres correspondant à ladite deuxième combinaison ajustée CA2 en consultant un ou deux tables d'index des secteurs TIS1 à TIS4 de tailles correspondantes.

Lorsque les secteurs SMP libres sont trouvés dans la mémoire physique MP. Les index de secteurs IS0 à IS7 au sein de l'index de partition virtuelle IPV30 correspondant à ladite partition sélectionnée PV30 sont remplis avec les adresses physiques initiales API de ces secteurs IPV30 SMP0 à IPV30 SMP7.

Il convient de noter que les index de secteurs IS0 à IS7 sont ici remplis prioritairement avec les adresses physiques initiales API des secteurs SMP ayant une plus grande taille T2.

Dans le cas où il y a assez des secteurs SMP de grande taille T2 libres et de petite taille T1 libre, l'adresse virtuelle AV générée par les moyens de traitement MT est illustrée sur la figure 9.

Ladite adresse virtuelle AV renvoyée au moyen de commande MC comporte les informations de la première partie P1 indiquant le numéro (en binaire) de la partition virtuelle PV30 libre sélectionnée et la combinaison sélectionnée CS (les deux champs C1 et C2), et la deuxième partie P2. Cette partie P2 est mise à 0, ce qui correspond à l'adresse physique initiale API du premier secteur IPV30 SMP0 alloué, c'est-à-dire ici, le premier index de secteurs IPV30 IS0 correspondant à la partition virtuelle IPV30. Ce secteur IPV30 IS0 contient l'adresse physique initiale API d'un secteur IPV30 SMP0 sélectionnée d'une taille de 256 octets.

Le moyen de commande, par exemple le processeur CPU, incrémentera alors la partie P2 et chaque adresse virtuelle incrémentée par le processeur correspondra à une adresse physique de la mémoire physique MP compte tenu de la table de correspondance TC

La génération de l'adresse virtuelle AV est très rapide et nécessite très peu de cycles d'horloges processeurs.

L'encombrement surfacique sur silicium d'un tel dispositif DIS est également réduit car notamment la table de correspondance et les tables d'index TIPV, TIS1 à TIS4 sont incorporées au sein de la mémoire physique MP.

Les partitions virtuelles PV, autrement dit les mémoires tampons virtuelles (« virtual buffer » en anglais) peuvent avoir des tailles différentes selon les applications.

L'invention n'est pas limitée aux modes de mise en œuvre et de réalisation qui viennent d'être décrits mais en embrasse toutes les variantes.

Ainsi bien que l'on ait décrit un jeu de tailles de référence JTR croissantes possédant deux tailles différentes, ledit jeu peut comporter plus que deux tailles qui peuvent en outre être rangées selon un ordre de tailles quelconque à condition que cet ordre soit connu.

En conséquence, une combinaison de secteurs SMPₖ d'une sous-partition SPVⱼ peut correspondre à une association d'un premier nombre N1 de secteurs SMPₖ d'une première taille T1 dudit jeu JTR et éventuellement d'au moins un deuxième nombre N2 de secteurs SMPₖ d'une deuxième taille T2 dudit jeu JTR immédiatement adjacente à la première taille T1 dans l'ordre de tailles.

La deuxième sous-partie SP2 peut donc comporter un premier champ C1 destiné à identifier ledit premier nombre N1 et éventuellement au moins ledit deuxième nombre N2, et un deuxième champ C2 destiné à identifier ladite première taille T1 et éventuellement au moins ladite deuxième taille T2.

Il serait ainsi possible d'avoir un troisième nombre et puis un quatrième nombre de secteurs SMPₖ et on aurait pu construire ladite sous-partition SPVᵢ avec plusieurs secteurs SMPₖ de trois tailles différentes voire plus. Ceci dépend du nombre de bits alloués à ladite deuxième sous-partie SP2 pour une configuration donnée. Sur un système de 32 bits, il y aurait un choix à faire entre le nombre et la flexibilité de configuration que l'on veut supporter, et la taille maximale des mémoires tampons virtuelles, c'est-à-dire le nombre de bits alloués à ladite deuxième partie P2.

En outre, une voire plusieurs itérations de la sélection d'une sous-partition virtuelle correspondant à une combinaison de secteurs et de la sélection de secteurs libres de la mémoire physique correspondant à ladite combinaison sélectionnée pourraient être prévues s'il n'y avait pas assez de secteurs libres de tailles correspondantes.

Il convient de noter que chaque itération détermine au moins une sous-partition ajustée SPVAᵢ correspondant à au moins une combinaison ajustée CAᵢ ayant le deuxième champ C2 rectifié par rapport à celui C2 de ladite combinaison sélectionnée CS et le premier champ C1 rectifié lorsqu'il n'y a pas assez de secteurs SMPₖ libres de la taille la plus petite parmi ladite première taille T1 et éventuellement au moins ladite deuxième taille T2.

Ledit deuxième champ C2 est par exemple rectifié de façon à incrémenter ladite première taille T1 et éventuellement au moins ladite deuxième taille T2 identifiées par le deuxième champ C2 avant la rectification. Ledit premier champ C1 est par exemple rectifié de façon à n'identifier qu'un nombre de secteur SMPₖ ayant une taille minimisée parmi ladite première taille T1 et éventuellement au moins ladite deuxième taille T2.

Enfin les index de secteurs IS peuvent être remplis prioritairement avec les adresses physiques initiales API des secteurs SMPₖ libres sélectionnés ayant l'une des tailles dudit jeu de tailles JTR, par exemple la plus grande ou la plus petite taille mémoire.

Ainsi, les paramètres tels que le nombre de tailles différentes, le nombre de champs d'index, le nombre de sous-partitions virtuelles par partition, la priorité de remplissage d'adresses physiques initiales de secteurs physiques et le nombre de paramètres de secteurs, etc. dépendent des choix d'implémentation.

## Revendications

1. Procédé de gestion d'espace mémoire, comprenant en réponse à une demande d'allocation (DA) d'un espace mémoire virtuel ayant une taille mémoire donnée au sein d'une mémoire virtuelle (MV), ladite mémoire virtuelle (MV) étant partitionnée en partitions virtuelles (PV), chaque partition (PVi) étant subdivisée en sous-partitions virtuelles (SPVⱼ), chaque sous-partition (SPVⱼ) correspondant à une combinaison de plusieurs secteurs (SMPₖ) de tailles identiques ou différentes d'une mémoire physique (MP),
a) une sélection d'une partition (PVi) libre,
b) une sélection d'une sous-partition virtuelle (SPVⱼ) correspondant à une combinaison de secteurs (SMPₖ) ayant une taille totale minimale couvrant ladite taille mémoire donnée de l'espace mémoire virtuel à allouer,
c) une sélection de secteurs (SMPₖ) libres de la mémoire physique (MP) correspondant à ladite combinaison sélectionnée,
d) une détermination d'une table de correspondance (TC) entre la partition virtuelle (PVᵢ) sélectionnée et les adresses physiques initiales (API) desdits secteurs (SMPₖ) libres sélectionnés, et
e) une génération d'une adresse virtuelle (AV) comportant une première partie (P1) permettant d'identifier ladite sous-partition virtuelle (SPVⱼ) sélectionnée et une deuxième partie (P2) destinée à contenir les différentes adresses dudit espace mémoire virtuel alloué au sein de ladite sous-partition virtuelle (SPVⱼ).

2. Procédé selon la revendication 1, dans lequel la première partie (P1) comporte une première sous-partie (SP1) permettant d'identifier ladite partition (PVᵢ) libre et une deuxième sous-partie (SP2) permettant d'identifier la sous-partition (SPVⱼ) sélectionnée au sein de ladite partition (PVᵢ) libre.

3. Procédé selon la revendication 2, dans lequel les tailles des secteurs sont choisies dans un jeu de tailles de référence (JTR) rangées selon un ordre de tailles connu, la combinaison de secteurs (SMPₖ) d'une sous-partition (SPVⱼ) correspond à une association d'un premier nombre (N1) de secteurs (SMPₖ) d'une première taille (T1) dudit jeu (JTR) et éventuellement d'au moins un deuxième nombre (N2) de secteurs (SMPₖ) d'une deuxième taille (T2) dudit jeu (JTR) immédiatement adjacente à la première taille (T1) dans l'ordre de tailles, la deuxième sous-partie (SP2) comporte un premier champ (C1) destiné à identifier ledit premier nombre (N1) et éventuellement au moins ledit deuxième nombre (N2), et un deuxième champ (C2) destiné à identifier ladite première taille (T1) et éventuellement au moins ladite deuxième taille (T2).

4. Procédé selon la revendication 3, comprenant en outre, après l'étape c), au moins une itération de l'étape b) de façon à déterminer au moins une sous-partition ajustée (SPVAi) correspondant à au moins une combinaison ajustée (CAi) ayant le deuxième champ (C2) rectifié par rapport à celui (C2) de ladite combinaison sélectionnée (CS) et le premier champ (C1) rectifié lorsqu'il n'y a pas assez de secteurs (SMPₖ) libres de la taille la plus petite parmi ladite première taille (T1) et éventuellement au moins ladite deuxième taille (T2), et au moins une itération de l'étape c) pour sélectionner des secteurs (SMPₖ) libres correspondant à ladite combinaison ajustée (CAᵢ).

5. Procédé selon l'une quelconque des revendications précédentes, dans lequel la table de correspondance (TC) comporte pour chaque partition virtuelle (PVi) plusieurs index de secteurs (ISO à IS7), chaque index de secteur (IS) étant destiné à être rempli avec l'adresse physique initiale (API) d'un des secteurs (SMPₖ) libres sélectionnés.

6. Procédé selon la revendication 5, dans lequel les index de secteurs (IS) sont remplis prioritairement avec les adresses physiques initiales (API) des secteurs (SMPₖ) libres sélectionnés ayant l'une des tailles dudit jeu de tailles (JTR).

7. Procédé selon l'une quelconque des revendications 3 à 6, dans lequel ladite deuxième partie (P2) de l'adresse virtuelle (AV) générée comporte plusieurs champs d'index (CI4, CI32, CI256 et CI2048) correspondant chacun à un index de secteurs (IS) dédié à des secteurs (SMPₖ) d'une taille différente dudit jeu (JTR) de tailles de référence.

8. Procédé selon la revendication 7 comprenant en outre une génération, à partir desdits champs d'index (CI4, CI32, CI256 et CI2048) et de ladite deuxième sous-partie (SP2), d'un premier paramètre de secteur (PS1) et d'au moins un deuxième paramètre de secteur (PS2).

9. Procédé selon la revendication 8 comprenant en outre au sein de ladite table de correspondance (TC) une désignation d'un des index de secteurs (IS₁) correspondant à la partition virtuelle (PVᵢ) sélectionnée à partir de ladite première sous-partie (SP1), dudit premier paramètre (PS1) et d'une adresse de base (AB) indiquant l'adresse de début de ladite table de correspondance (TC).

10. Procédé selon la revendication 9 comprenant en outre au sein dudit secteur physique (SP) sélectionné dont l'adresse physique initiale (API) est stockée dans ledit index de secteurs (IS₁) une désignation d'une adresse physique absolue (APA) correspondant à ladite adresse virtuelle (AV) à partir dudit deuxième paramètre (PS2) et de ladite adresse physique initiale (API).

11. Dispositif de gestion d'espace mémoire, comprenant :
une mémoire virtuelle (MV) partitionnée en partitions virtuelles (PVI), chaque partition (PVi) étant subdivisée en sous-partitions virtuelles (SPVⱼ), une mémoire physique (MP) comportant plusieurs secteurs (SMPₖ), chaque sous-partition (SPVⱼ) correspondant à une combinaison de plusieurs secteurs (SMPₖ) de tailles identiques ou différentes, et des moyens de traitement (MT) configurés pour effectuer
a) une sélection d'une partition (PVᵢ) libre,
b) une sélection d'une sous-partition virtuelle (SPVⱼ) correspondant à une combinaison (CS) de secteurs (SMPₖ) ayant une taille totale minimale couvrant ladite taille mémoire donnée de l'espace mémoire virtuel à allouer,
c) une sélection de secteurs (SMPₖ) libres de la mémoire physique (MP) correspondant à ladite combinaison sélectionnée (CS),
d) une détermination d'une table de correspondance (TC) entre la partition virtuelle (PVi) sélectionnée et les adresses physiques initiales (API) desdits secteurs (SMPₖ) libres sélectionnés, et
e) une génération d'une adresse virtuelle (AV) comportant une première partie (P1) permettant d'identifier ladite sous-partition virtuelle (SPVⱼ) sélectionnée et une deuxième partie (P2) destinée à contenir les différentes adresses dudit espace mémoire virtuel alloué au sein de ladite sous-partition virtuelle (SPVⱼ).

12. Dispositif selon la revendication 11, dans lequel la première partie (P1) comporte une première sous-partie (SP1) permettant d'identifier ladite partition (PVi) libre et une deuxième sous-partie (SP2) permettant d'identifier la sous-partition (SPVⱼ) sélectionnée au sein de ladite partition (PVᵢ) libre.

13. Dispositif selon la revendication 12, dans lequel les moyens de traitement (MT) sont configurés pour choisir les tailles des secteurs dans un jeu de tailles de référence (JTR) rangées selon un ordre de tailles connu, la combinaison de secteurs d'une sous-partition (SPVⱼ) correspondant à une association d'un premier nombre (N1) de secteurs (SMPₖ) d'une première taille (T1) dudit jeu (JTR) et éventuellement d'au moins un deuxième nombre (N2) de secteurs (SMPₖ) d'une deuxième taille (T2) dudit jeu (JTR) immédiatement adjacente à la première taille (T1) dans l'ordre de tailles, la deuxième sous-partie (SP2) comportant un premier champ (C1) destiné à identifier ledit premier nombre (N1) et éventuellement au moins ledit deuxième nombre (N2), et un deuxième champ (C2) destiné à identifier ladite première taille (T1) et éventuellement au moins ladite deuxième taille (T2).

14. Dispositif selon la revendication 13, dans lequel les moyens de traitement (MT) sont en outre configurés pour déterminer au moins une sous-partition ajustée (SPVA1) correspondant à au moins une combinaison ajustée (CA1) ayant le deuxième champ (C2) rectifié et le premier champ (C1) rectifié lorsqu'il n'y a pas assez de secteurs (SMPₖ) libres de la taille la plus petite entre ladite première taille (T1) et éventuellement au moins ladite deuxième taille (T2), et les moyens de traitement (MT) étant en outre configurés pour sélectionner des secteurs (SMPₖ) libres correspondant à ladite combinaison ajustée (CAᵢ)

15. Dispositif selon l'une quelconque des revendications 11 à 14, dans lequel la table de correspondance (TC) est incorporée dans la mémoire physique (MP) et comporte pour chaque partition virtuelle (PVᵢ) plusieurs index de secteurs (ISO à IS7) destinés à être remplis chacun avec l'adresse physique initiale (API) d'un des secteurs (SMPₖ) libres sélectionnés.

16. Dispositif selon l'une quelconque des revendications 11 à 15, dans lequel les index de secteurs (ISO à IS7) sont remplis prioritairement avec les adresses physiques initiales (API) des secteurs (SMP) libres sélectionnés ayant l'une des tailles dudit jeu de tailles (JTR).

17. Dispositif selon l'une quelconque des revendications 11 à 16, dans lequel chaque adresse de ladite deuxième partie (P2) comporte plusieurs champs d'index (CI4, CI32, CI256 et CI2048) correspondant chacun à un index de secteurs (IS) dédié à des secteurs (SMPₖ) d'une taille différente dudit jeu (JTR).

18. Dispositif selon la revendication 20, dans lequel les moyens de traitement (MT) sont en outre configurés pour générer à partir desdits champs d'index (CI4, CI32, CI256 et CI2048) et de ladite deuxième sous-partie (SP2) un premier paramètre de secteur (PS1) et d'au moins un deuxième paramètre de secteur (PS2).

19. Dispositif selon la revendication 18, dans lequel la mémoire physique (MP) comporte en outre une adresse de base (AB) indiquant l'adresse de début de ladite table de correspondance (TC), les moyens de traitement (MT) étant par ailleurs configurés pour désigner au sein de ladite table de correspondance (TC) un des index de secteurs (IS₁) correspondant à la partition virtuelle (PVi) sélectionnée à partir de ladite première sous-partie (SP1), dudit premier paramètre (PS1) et de ladite adresse de base (AB).

20. Dispositif selon la revendication 19, les moyens de traitements (MT) sont par ailleurs configurés pour désigner au sein dudit secteur (SMPₖ) sélectionné dont l'adresse physique initiale (API) est stockée dans ledit index de secteurs (IS₁) l'adresse physique absolue (APA) correspondant à ladite adresse virtuelle (AV) à partir dudit deuxième paramètre (PS2) et de l'adresse physique initiale (API).

## Patentansprüche

1. Verfahren zur Verwaltung von Speicherplatz, umfassend als Antwort auf eine Zuweisungsanforderung (DA) eines virtuellen Speicherplatzes mit einer bestimmten Speichergröße innerhalb eines virtuellen Speichers (MV), wobei der virtuelle Speicher (MV) in virtuelle Partitionen (PV) partitioniert ist, wobei jede Partition (PVi) in virtuelle Unterpartitionen (SPVⱼ) unterteilt ist, wobei jede Unter-Partition (SPVⱼ) einer Kombination mehrerer Sektoren (SMPₖ) identischer oder unterschiedlicher Größen eines physischen Speichers (MP) entspricht,
a) eine Auswahl einer freien Partition (PVᵢ),
b) eine Auswahl einer virtuellen Unter-Partition (SPVⱼ), die einer Kombination von Sektoren (SMPₖ) mit einer minimalen Gesamtgröße entspricht, die die bestimmte Speichergröße des zuzuweisenden virtuellen Speicherplatzes deckt,
c) eine Auswahl von freien Sektoren (SMPₖ) des physischen Speichers (MP), die der ausgewählten Kombination entspricht,
d) eine Bestimmung einer Entsprechungstabelle (TC) zwischen der ausgewählten virtuellen Partition (PVi) und den physischen Ausgangsadressen (API) der ausgewählten freien Sektoren (SMPₖ), und
e) eine Erzeugung einer virtuellen Adresse (AV), die einen ersten Teil (P1) aufweist, der erlaubt, die ausgewählte virtuelle Unter-Partition (SPVⱼ) zu identifizieren, und einen zweiten Teil (P2), der bestimmt ist, die verschiedenen Adressen des zugewiesenen virtuellen Speicherplatzes innerhalb der virtuellen Unter-Partition (SPVⱼ) zu enthalten.

2. Verfahren nach Anspruch 1, wobei der erste Teil (P1) einen ersten Unterteil (SP1) aufweist, der erlaubt, die freie Partition (PVᵢ) zu identifizieren, und einen zweiten Unterteil (SP2), der erlaubt, die innerhalb der freien Partition (PVi) ausgewählte Unter-Partition (SPVⱼ) zu identifizieren.

3. Verfahren nach Anspruch 2, wobei die Größen der Sektoren, die gemäß einer bekannten Größenordnung geordnet sind, aus einem Referenzgrößenset (JTR) ausgewählt werden, wobei die Kombination von Sektoren (SMPₖ) einer Unter-Partition (SPVⱼ) einer Zuordnung einer ersten Anzahl (N1) von Sektoren (SMPₖ) einer ersten Größe (T1) des Sets (JTR) und eventuell mindestens einer zweiten Anzahl (N2) von Sektoren (SMPₖ) einer zweiten Größe (T2) des Sets (JTR) in unmittelbarer Nachbarschaft zur ersten Größe (T1) in der Größenordnung entspricht, wobei der zweite Unterteil (SP2) ein erstes Feld (C1) aufweist, das zur Identifizierung der ersten Anzahl (N1) bestimmt ist und eventuell mindestens der zweiten Anzahl (N2), und ein zweites Feld (C2), das zur Identifizierung der ersten Größe (T1) und eventuell mindestens der zweiten Größe (T2) bestimmt ist.

4. Verfahren nach Anspruch 3, umfassend ferner, nach dem Schritt c), mindestens eine Iteration von Schritt b), so dass mindestens eine angepasste Unter-Partition (SPVAi) bestimmt wird, die mindestens einer angepassten Kombination (CAi) entspricht, mit dem zweiten berichtigten Feld (C2) in Bezug auf das (C2) der ausgewählten Kombination (CS) und dem ersten berichtigten Feld (C1), wenn es nicht genug freie Sektoren (SMPₖ) der kleinsten Größe von der ersten Größe (T1) und eventuell mindestens der zweiten Größe (T2) gibt, und mindestens eine Iteration von Schritt c), um freie Sektoren (SMPₖ) auszuwählen, die der angepassten Kombination (CAᵢ) entsprechen.

5. Verfahren nach einem der vorangehenden Ansprüche, wobei die Entsprechungstabelle (TC) für jede virtuelle Partition (PVᵢ) mehrere Sektorenindizes (ISO bis IS7) aufweist, wobei jeder Sektorindex (IS) bestimmt ist, mit der physischen Ausgangsadresse (API) eines der ausgewählten freien Sektoren (SMPₖ) gefüllt zu werden.

6. Verfahren nach Anspruch 5, wobei die Sektorenindizes (IS) prioritär mit den physischen Ausgangsadressen (API) der ausgewählten freien Sektoren (SMPₖ) mit einer der Größen des Größensets (JTR) gefüllt werden.

7. Verfahren nach einem der Ansprüche 3 bis 6, wobei der zweite Teil (P2) der erzeugten virtuellen Adresse (AV) mehrere Indexfelder (CI4, CI32, CI256 und CI2048) aufweist, die jeweils einem Sektorenindex (IS) entsprechen, der Sektoren (SMPₖ) einer Größe zugeteilt ist, die sich von dem Referenzgrößenset (JTR) unterscheidet.

8. Verfahren nach Anspruch 7, umfassend ferner eine Erzeugung, auf der Basis der Indexfelder (CI4, CI32, CI256 und CI2048) und dem zweiten Unterteil (SP2), eines ersten Sektorparameters (PS1) und mindestens eines zweiten Sektorparameters (PS2).

9. Verfahren nach Anspruch 8, umfassend ferner innerhalb der Entsprechungstabelle (TC) eine Bezeichnung eines der Sektorenindizes (IS₁) entsprechend der virtuellen Partition (PVᵢ) , die auf der Basis des ersten Unterteils (SP1), des ersten Parameters (PS1) und einer Basisadresse (AB) ausgewählt wurde, die die Anfangsadresse der Entsprechungstabelle (TC) angibt.

10. Verfahren nach Anspruch 9, umfassend ferner innerhalb des ausgewählten physischen Sektors (SP), dessen physische Ausgangsadresse (API) im Sektorenindex (IS₁) gespeichert ist, eine Bezeichnung einer absoluten physischen Adresse (APA) entsprechend der virtuellen Adresse (AV) auf der Basis des zweiten Parameters (PS2) und der physischen Ausgangsadresse (API).

11. Vorrichtung zur Verwaltung von Speicherplatz, umfassend:
einen virtuellen Speicher (MV), der in virtuelle Partitionen (PVI) partitioniert ist, wobei jede Partition (PVi) in virtuelle Unterpartitionen (SPVⱼ) unterteilt ist, einen physischen Speicher (MP), der mehrere Sektoren (SMPₖ) aufweist, wobei jede Unter-Partition (SPVⱼ) einer Kombination mehrerer Sektoren (SMPₖ) identischer oder unterschiedlicher Größen entspricht, und Verarbeitungsmittel (MT), die ausgelegt sind, um durchzuführen
a) eine Auswahl einer freien Partition (PVᵢ),
b) eine Auswahl einer virtuellen Unter-Partition (SPVⱼ), die einer Kombination (CS) von Sektoren (SMPₖ) mit einer minimalen Gesamtgröße entspricht, die die bestimmte Speichergröße des zuzuweisenden virtuellen Speicherplatzes deckt,
c) eine Auswahl von freien Sektoren (SMPₖ) des physischen Speichers (MP), die der ausgewählten Kombination (CS) entspricht,
d) eine Bestimmung einer Entsprechungstabelle (TC) zwischen der ausgewählten virtuellen Partition (PVi) und den physischen Ausgangsadressen (API) der ausgewählten freien Sektoren (SMPₖ), und
e) eine Erzeugung einer virtuellen Adresse (AV), die einen ersten Teil (P1) aufweist, der erlaubt, die ausgewählte virtuelle Unter-Partition (SPVⱼ) zu identifizieren, und einen zweiten Teil (P2), der bestimmt ist, die verschiedenen Adressen des zugewiesenen virtuellen Speicherplatzes innerhalb der virtuellen Unter-Partition (SPVⱼ) zu enthalten.

12. Vorrichtung nach Anspruch 11, wobei der erste Teil (P1) einen ersten Unterteil (SP1) aufweist, der erlaubt, die freie Partition (PVᵢ) zu identifizieren, und einen zweiten Unterteil (SP2), der erlaubt, die innerhalb der freien Partition (PVi) ausgewählte Unter-Partition (SPVⱼ) zu identifizieren.

13. Vorrichtung nach Anspruch 12, wobei die Verarbeitungsmittel (MT) ausgelegt sind, um die Größen der Sektoren, die gemäß einer bekannten Größenordnung geordnet sind, aus einem Referenzgrößenset (JTR) zu wählen, wobei die Kombination von Sektoren einer Unter-Partition (SPVⱼ) einer Zuordnung einer ersten Anzahl (N1) von Sektoren (SMPₖ) einer ersten Größe (T1) des Sets (JTR) und eventuell mindestens einer zweiten Anzahl (N2) von Sektoren (SMPₖ) einer zweiten Größe (T2) des Sets (JTR) in unmittelbarer Nachbarschaft zur ersten Größe (T1) in der Größenordnung entspricht, wobei der zweite Unterteil (SP2) ein erstes Feld (C1) aufweist, das zur Identifizierung der ersten Anzahl (N1) bestimmt ist und eventuell mindestens der zweiten Anzahl (N2), und ein zweites Feld (C2), das zur Identifizierung der ersten Größe (T1) und eventuell mindestens der zweiten Größe (T2) bestimmt ist.

14. Vorrichtung nach Anspruch 13, wobei die Verarbeitungsmittel (MT) ferner ausgelegt sind, um mindestens eine angepasste Unter-Partition (SPVA1) zu bestimmen, die mindestens einer angepassten Kombination (CA1) entspricht, mit dem zweiten berichtigten Feld (C2) und dem ersten berichtigten Feld (C1), wenn es nicht genug freie Sektoren (SMPₖ) der kleinsten Größe von der ersten Größe (T1) und eventuell mindestens der zweiten Größe (T2) gibt, und die Verarbeitungsmittel (MT) ferner ausgelegt sind, um freie Sektoren (SMPₖ) auszuwählen, die der angepassten Kombination (CAᵢ) entsprechen.

15. Vorrichtung nach einem der Ansprüche 11 bis 14, wobei die Entsprechungstabelle (TC) in den physischen Speicher (MP) integriert ist und für jede virtuelle Partition (PVᵢ) mehrere Sektorenindizes (ISO bis IS7) aufweist, die bestimmt sind, jeweils mit der physischen Ausgangsadresse (API) eines der ausgewählten freien Sektoren (SMPₖ) gefüllt zu sein.

16. Vorrichtung nach einem der Ansprüche 11 bis 15, wobei die Sektorenindizes (ISO bis IS7) prioritär mit den physischen Ausgangsadressen (API) der ausgewählten freien Sektoren (SMP) mit einer der Größen des Größensets (JTR) gefüllt sind.

17. Vorrichtung nach einem der Ansprüche 11 bis 16, wobei jede Adresse des zweiten Teils (P2) mehrere Indexfelder (CI4, CI32, CI256 und CI2048) aufweist, die jeweils einem Sektorenindex (IS) entsprechen, der Sektoren (SMPₖ) einer Größe zugeteilt ist, die sich vom Set (JTR) unterscheidet.

18. Vorrichtung nach Anspruch 20, wobei die Verarbeitungsmittel (MT) ferner ausgelegt sind, um auf der Basis der Indexfelder (CI4, CI32, CI256 und CI2048) und des zweiten Unterteils (SP2) einen ersten Sektorparameter (PS1) und mindestens einen zweiten Sektorparameter (PS2) zu erzeugen.

19. Vorrichtung nach Anspruch 18, wobei der physische Speicher (MP) ferner eine Basisadresse (AB) aufweist, die die Anfangsadresse der Entsprechungstabelle (TC) angibt, wobei die Verarbeitungsmittel (MT) im Übrigen ausgelegt sind, um innerhalb der Entsprechungstabelle (TC) einen der Sektorenindizes (IS₁) zu bezeichnen, der der virtuellen Partition (PVi) entspricht, die auf der Basis des ersten Unterteils (SP1), des ersten Parameters (PS1) und der Basisadresse (AB) ausgewählt wurde.

20. Vorrichtung nach Anspruch 19, wobei die Verarbeitungsmittel (MT) im Übrigen ausgelegt sind, um innerhalb des ausgewählten Sektors (SMPₖ), dessen physische Ausgangsadresse (API) in dem Sektorenindex (IS₁) gespeichert ist, die absolute physische Adresse (APA) entsprechend der virtuellen Adresse (AV) auf der Basis des zweiten Parameters (PS2) und der physischen Ausgangsadresse (API) zu bezeichnen.

## Claims

1. Method for managing memory space comprising, in response to an allocation request (DA) for a virtual memory space having a given memory size within a virtual memory (MV), said virtual memory (MV) being partitioned into virtual partitions (PV), each partition (Pvi) being subdivided into virtual sub-partitions (SPVⱼ), each sub-partition (SPVⱼ) corresponding to a combination of a plurality of sectors (SMPₖ) of identical or different sizes of a physical memory (MP),
a) selecting a free partition (PVᵢ) ,
b) selecting a virtual sub-partition (SPVⱼ) corresponding to a combination of sectors (SMPₖ) having a minimum total size covering said given memory size of the virtual memory space to be allocated,
c) selecting free sectors (SMPₖ) of the physical memory (MP) corresponding to said selected combination,
d) determining a lookup table (TC) between the selected virtual partition (Pvi) and the initial physical addresses (API) of said selected free sectors (SMPₖ), and
e) generating a virtual address (AV) including a first part (P1) for identifying said selected virtual sub-partition (SPVⱼ) and a second part (P2) intended to contain the different addresses of said virtual memory space allocated within said virtual sub-partition (SPVⱼ).

2. Method according to claim 1, wherein the first part (P1) includes a first sub-part (SP1) for identifying said free partition (PVᵢ) and a second sub-part (SP2) for identifying the sub-partition (SPVⱼ) selected within said free partition (PVᵢ).

3. Method according to claim 2, wherein the sizes of the sectors are selected from a set of reference sizes (JTR) arranged in a known size order, the combination of sectors (SMPₖ) of a sub-partition (SPVⱼ) corresponding to an association of a first number (N1) of sectors (SMPₖ) of a first size (T1) of said set (JTR) and optionally of at least one second number (N2) of sectors (SMPₖ) of a second size (T2) of said set (JTR) immediately adjacent to the first size (T1) in size order, the second sub-part (SP2) including a first field (C1) intended to identify said first number (N1) and optionally at least said second number (N2), and a second field (C2) intended to identify said first size (T1) and optionally at least said second size (T2).

4. Method according to claim 3, further comprising, after step c), at least one iteration of step b) so as to determine at least one adjusted sub-partition (SPVAᵢ) corresponding to at least one adjusted combination (CAᵢ) having the second field (C2) corrected with respect to that (C2) of said selected combination (CS) and the first field (C1) corrected when there are not enough free sectors (SMPₖ) of the smallest size from among said first size (T1) and optionally at least said second size (T2), and at least one iteration of step c) for selecting free sectors (SMPₖ) corresponding to said adjusted combination (CAi).

5. Method according to any of the preceding claims, wherein the lookup table (TC) includes, for each virtual partition (Pvᵢ), a plurality of sector indices (ISO to IS7), each sector index (IS) being intended to be filled with the initial physical address (API) of one of the selected free sectors (SMPₖ) .

6. Method according to claim 5, wherein the sector indices (IS) are filled first and foremost with the initial physical addresses (API) of the selected free sectors (SMPₖ) having one of the sizes of said set of sizes (JTR).

7. Method according to any of claims 3 to 6, wherein said second part (P2) of the generated virtual address (AV) includes a plurality of index fields (CI4, CI32, CI256 and CI2048), each corresponding to a sector index (IS) dedicated to sectors (SMPₖ) of a different size of said set (JTR) of reference sizes.

8. Method according to claim 7, further comprising generating a first sector parameter (PS1) and at least one second sector parameter (PS2) from said index fields (CI4, CI32, CI256 and CI2048) and from said second sub-part (SP2).

9. Method according to claim 8, further comprising, within said lookup table (TC), a designation of one of the sector indices (ISi) corresponding to the selected virtual partition (PVᵢ) from said first sub-part (SP1), from said first parameter (PS1) and from a base address (AB) indicating the start address of said lookup table (TC).

10. Method according to claim 9, further comprising, within said selected physical sector (SP), the initial physical address (API) whereof is stored in said sector index (IS₁), a designation of an absolute physical address (APA) corresponding to said virtual address (AV) from said second parameter (PS2) and from said initial physical address (API).

11. Memory space management device, comprising:
a virtual memory (MV) partitioned into virtual partitions (PVI), each partition (PVi) being subdivided into virtual sub-partitions (SPVⱼ), a physical memory (MP) including a plurality of sectors (SMPₖ), each sub-partition (SPVⱼ) corresponding to a combination of a plurality of sectors (SMPₖ) of identical or different sizes, and processing means (MT) configured to
a) select a free partition (PVᵢ) ,
b) select a virtual sub-partition (SPVⱼ) corresponding to a combination (CS) of sectors (SMPₖ) having a minimum total size covering said given memory size of the virtual memory space to be allocated,
c) select free sectors (SMPₖ) of the physical memory (MP) corresponding to said selected combination (CS),
d) determine a lookup table (TC) between the selected virtual partition (Pvi) and the initial physical addresses (API) of said selected free sectors (SMPₖ), and
e) generate a virtual address (AV) including a first part (P1) for identifying said selected virtual sub-partition (SPVⱼ) and a second part (P2) intended to contain the different addresses of said virtual memory space allocated within said virtual sub-partition (SPVⱼ).

12. Device according to claim 11, wherein the first part (P1) includes a first sub-part (SP1) for identifying said free partition (PVi) and a second sub-part (SP2) for identifying the sub-partition (SPVⱼ) selected within said free partition (PVi).

13. Device according to claim 12, wherein the processing means (MT) are configured to select the sizes of the sectors from a set of reference sizes (JTR) arranged in a known size order, the combination of sectors of a sub-partition (SPVⱼ) corresponding to an association of a first number (N1) of sectors (SMPₖ) of a first size (T1) of said set (JTR) and optionally of at least one second number (N2) of sectors (SMPₖ) of a second size (T2) of said set (JTR) immediately adjacent to the first size (T1) in size order, the second sub-part (SP2) including a first field (C1) intended to identify said first number (N1) and optionally at least said second number (N2), and a second field (C2) intended to identify said first size (T1) and optionally at least said second size (T2).

14. Device according to claim 13, wherein the processing means (MT) are further configured to determine at least one adjusted sub-partition (SPVA1) corresponding to at least one adjusted combination (CA1) having the second field (C2) corrected and the first field (C1) corrected when there are not enough free sectors (SMPₖ) of the smallest size from among said first size (T1) and optionally at least said second size (T2), and the processing means (MT) being further configured to select free sectors (SMPₖ) corresponding to said adjusted combination (CAᵢ) .

15. Device according to any of claims 11 to 14, wherein the lookup table (TC) is incorporated into the physical memory (MP) and includes, for each virtual partition (PVᵢ) , a plurality of sector indices (ISO to IS7) that are each intended to be filled with the initial physical address (API) of one of the selected free sectors (SMPₖ).

16. Device according to any of claims 11 to 15, wherein the sector indices (ISO to IS7) are filled first and foremost with the initial physical addresses (API) of the selected free sectors (SMP) having one of the sizes of said set of sizes (JTR).

17. Device according to any of claims 11 to 16, wherein each address of said second part (P2) includes a plurality of index fields (CI4, CI32, CI256 and CI2048), each corresponding to a sector index (IS) dedicated to sectors (SMPₖ) of a different size of said set (JTR).

18. Device according to claim 20, wherein the processing means (MT) are further configured to generate a first sector parameter (PS1) and at least one second sector parameter (PS2) from said index fields (CI4, CI32, CI256 and CI2048) and from said second sub-part (SP2).

19. Device according to claim 18, wherein the physical memory (MP) further includes a base address (AB) indicating the start address of said lookup table (TC), the processing means (MT) being further configured to designate, within said lookup table (TC), one of the sector indices (ISi) corresponding to the selected virtual partition (PVi) from said first sub-part (SP1), from said first parameter (PS1) and from said base address (AB).

20. Device according to claim 19, wherein the processing means (MT) are further configured to designate, within said selected sector (SMPₖ), the initial physical address (API) whereof is stored in said sector index (IS₁), the absolute physical address (APA) corresponding to said virtual address (AV) from said second parameter (PS2) and from the initial physical address (API).
